# FASCICULE DE BREVET EUROPEEN

(11) **EP 2 091 772 B1**
(45) Date de publication et mention de la délivrance du brevet: **25.06.2014**
(21) Numéro de dépôt: 07866536.1
(22) Date de dépôt: 20.11.2007
(51) Int. Cl.: H02P 9/00

(54) **PROCEDE ET DISPOSITIF DE SIGNALISATION D'UNE ANOMALIE DE FONCTIONNEMENT D'UN SYSTEME ELECTRONIQUE DE PUISSANCE D'UN ALTERNATEUR POLYPHASE**
VERFAHREN UND VORRICHTUNG ZUR ANZEIGE EINER GESTÖRTEN FUNKTION EINES ELEKTRONISCHEN LEISTUNGSSYSTEMS BEI EINEM MEHRPHASENGENERATOR
METHOD AND DEVICE FOR SIGNALING AN ABNORMAL FUNCTIONING OF AN ELECTRONIC POWER SYSTEM IN A MULTIPLE-PHASE ALTERNATOR

(30) Priorité: 04.12.2006 FR 0655302
(43) Date de publication de la demande: 26.08.2009
(73) Titulaire: Valeo Equipements Electriques Moteur, 94046 Créteil Cedex (FR)
(72) Inventeur: RECHDAN, Raymond, 94440 Villecresnes (FR); PIERRET, Jean-Marie, 75012 Paris (FR); LOUISE, Christophe, 94140 Alfortville (FR)
(86) Numéro de dépôt international: PCT/FR2007/052371
(87) Numéro de publication internationale: WO 2008/068437

(56) Documents cités:
- EP-A2- 0 571 657
- WO-A-2006/095497
- DE-A1- 2 613 168
- FR-A- 2 678 952
- US-A- 4 080 642
- US-A- 5 127 085

## Description

### DOMAINE TECHNIQUE DE L'INVENTION.

La présente invention concerne un procédé et un dispositif de signalisation d'une anomalie de fonctionnement d'un système électronique de puissance d'un alternateur polyphasé. L'invention concerne aussi l'alternateur polyphasé comportant ce dispositif de signalisation.

### ARRIERE PLAN TECHNOLOGIQUE DE L'INVENTION.

Pour des raisons de sécurité évidentes, les équipements importants d'un véhicule automobile sont munis de dispositifs de détection et de signalisation de toute anomalie de fonctionnement.

La génératrice de bord, constituée généralement d'un alternateur dont les tensions de phases sont redressées, est l'un de ces équipements importants, et tout conducteur connaît l'emplacement du voyant rouge dit « de charge » sur le tableau de bord de sa voiture.

La généralisation de l'utilisation de l'électronique à bord des véhicules, souvent en remplacement des éléments électromécaniques, permet une détection toujours plus fine des défauts de fonctionnement et des circonstances des pannes, à des fins de diagnostic ou de signalisation.

Par exemple, le régulateur de tension électronique décrit dans le brevet US5646599 détecte non seulement une anomalie de la tension de charge de la batterie, mais aussi un défaut de l'une des tensions de phases de l'alternateur, ainsi que la non conformité du rapport cyclique du courant d'excitation à des fourchettes de valeurs nominales selon le mode de fonctionnement de l'alternateur.

Mais le développement des systèmes électroniques augmente aussi leur complexité, ce qui engendre de nouveaux besoins de détection et de signalisation de pannes.

Ainsi, l'unité d'alimentation électrique décrite dans le brevet US5646599 utilise des ponts de diodes comme redresseurs. Ces éléments sont considérés comme fiables, et la détection d'une défaillance de l'un d'entre eux n'est réalisée que de manière indirecte en contrôlant la tension de charge.

En revanche, si pour des raisons d'amélioration du rendement, on remplace les ponts de diodes par des redresseurs synchrones basés sur le pilotage ad hoc de transistors de type MOSFET (transistor à effet de champ à grille isolée), se pose la question de la détection et de la signalisation d'un défaut de fonctionnement de ces transistors et de leurs circuits de pilotage.

Le problème de la détection d'un défaut peut être facilement résolu au niveau du composant par une conception appropriée de celui-ci, mais il reste le problème de la signalisation du défaut, c'est-à-dire celui de porter à la connaissance du conducteur l'anomalie détectée, qui entraîne une complexité accrue de la connectique et des composants, et corrélativement du coût. De plus, la multiplicité des voyants ou autres indicateurs peut être un inconvénient pour le conducteur déjà submergé par le grand nombre des informations présentes sur le tableau de bord d'un véhicule.

Par WO2006095497 il est connu un procédé de traitement d'anomalie dans un dispositif de pilotage de charge. Dans cette méthode, une unité de commande électronique commande un alterno-démarreur de manière à annuler le couple mécanique lorsque la vitesse de rotation de cet alterno-démarreur dépasse une valeur limite prédéterminée. De plus, lorsque l'unité de commande électronique détermine que la vitesse de rotation de l'alterno-démarreur dépasse une valeur limite prédéterminée, il commande une réduction, d'une quantité prédéterminée, d'une tension d'entrée d'un convertisseur.

### DESCRIPTION GENERALE DE L'INVENTION.

La présente invention a essentiellement pour objet d'apporter des solutions aux inconvénients mentionnés ci-dessus de l'état de la technique.

Selon un premier aspect, l'invention concerne un procédé de signalisation d'une anomalie de fonctionnement d'un système électronique de puissance d'un alternateur polyphasé.

Le procédé selon l'invention est tel que défini dans la revendication 1.

Le système électronique de puissance concerné est du type de ceux comprenant un ensemble de redresseurs aptes à redresser les tensions de phases produites par l'alternateur, et un ensemble de régulation apte à commander un courant d'excitation de cet alternateur, à contrôler la conformité d'au moins une caractéristique courante d'au moins l'une des tensions de phases à une caractéristique nominale, et à signaler toute non-conformité.

L'invention autorise ainsi une utilisation de moyens de signalisation prévus dans un régulateur existant pour signaler des défauts de fonctionnement supplémentaires non traités initialement par ces moyens de signalisation.

Alternativement, on force au moins l'une des tensions de phases à une tension non conforme en cas de défaut de fonctionnement d'au moins l'un des redresseurs.

L'invention concerne aussi un dispositif de signalisation d'une anomalie de fonctionnement d'un système électronique de puissance d'un alternateur polyphasé adapté à la mise en oeuvre du procédé décrit ci-dessus.

Le dispositif selon l'invention est tel que défini à la revendication 3.

Le système électronique de puissance considéré est un ensemble de redresseurs des tensions de phases produites par l'alternateur, et un ensemble de régulation.

L'ensemble de régulation comporte classiquement:
- des moyens de commande d'un courant d'excitation de l'alternateur ;
- des moyens de contrôle de la conformité d'au moins une caractéristique courante d'au moins l'une des tensions de phases à une caractéristique nominale ;
- des moyens d'indication de toute non-conformité.

On tirera avantage du fait que le circuit de pilotage comporte une borne de diagnostic, préférentiellement deux, sur laquelle est appliquée la tension de décalage par le générateur, et que, de préférence, plusieurs exemplaires de cette borne sont reliés entre eux.

L'objet de l'invention est aussi un alternateur polyphasé, de préférence hexaphasé, comportant un dispositif de signalisation d'une anomalie de fonctionnement d'un système électronique de puissance tel que décrit précédemment.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La Figure 1 représente schématiquement un dispositif de signalisation d'une anomalie de fonctionnement d'un système électronique de puissance connu de l'état de la technique.
La Figure 2 représente schématiquement un dispositif de signalisation d'une anomalie de fonctionnement d'un système électronique de puissance selon l'invention.
La Figure 6 représente schématiquement un alternateur hexaphasé comprenant un dispositif de signalisation d'une anomalie de fonctionnement selon l'invention.

### DESCRIPTION DES MODES DE REALISATION PREFERES DE L'INVENTION.

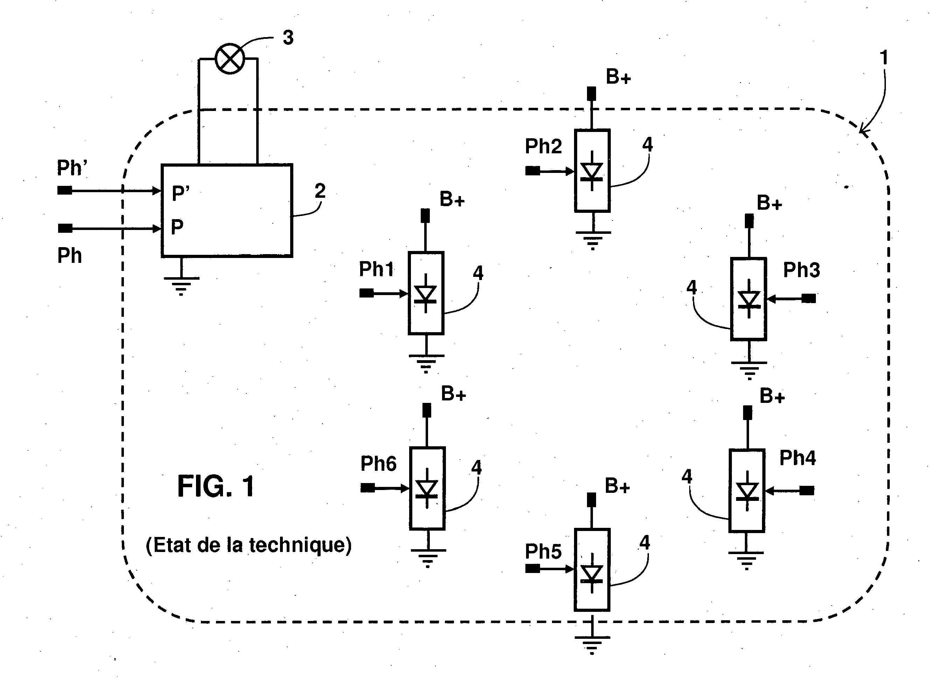

Dans le cas actuel des alternateurs à ponts de diodes, le diagnostic d'un défaut de fonctionnement du système électronique de puissance 1, tel que celui représenté sur la Figure 1, est assuré par le régulateur 2 de l'ensemble de régulation 2,3, qui détecte une anomalie de deux Ph,Ph' des tensions de phases Ph1 ,Ph2,Ph3,Ph4,Ph5,Ph6 appliquées sur ses entrées'« phase » P,P'.

La détection d'une anomalie provoque sa signalisation au moyen d'une lampe 3, ou bien l'émission d'un code sur le réseau de communication de bord, quand le régulateur 2 est muni d'une interface appropriée.

Ce dispositif connu permet de détecter une défaillance de deux des trois bras de ponts utilisés pour le redressement des trois tensions de phases dans le cas d'un alternateur triphasé, ou deux des six bras de ponts 4 dans le cas d'un alternateur hexaphasé (cas représenté sur la Figue 1) utilisés pour le redressement des six tensions de phases Ph1,Ph2,Ph3,Ph4,Ph5,Ph6.

Ce dispositif ne permet pas de détecter un mauvais fonctionnement des diodes 4, mais cette limitation est justifiée par la fiabilité des diodes 4, et la maîtrise de l'utilisation de celles-ci et de leur assemblage.

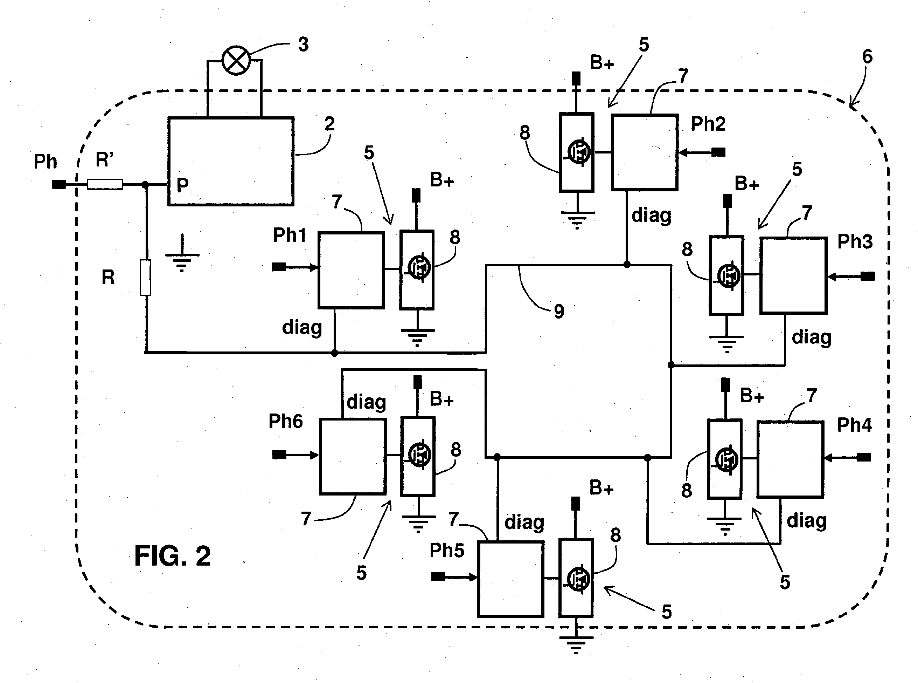

Dans le cas du remplacement des redresseurs à diodes 4 par des redresseurs synchrones 5, comme le montre la Figure 2, il devient souhaitable de diagnostiquer tout défaut de fonctionnement de l'électronique de puissance 6, notamment des MOSFET 8 et de leurs circuits de pilotage 7.

Pour ce faire, les circuits de pilotage 7 sont constitués par des circuits ASIC (circuits intégrés à application spécifique) qui comportent chacun une sortie de diagnostic diag qui présente un potentiel compris, de préférence, entre 0V et 2V par rapport à la masse en cas de défaut de fonctionnement.

Pour des raisons pratiques de câblage, et de coût, on conçoit qu'il n'est pas possible de signaler individuellement chaque défaut détecté au moyen d'un voyant. De plus, il n'est pas souhaitable de créer une liaison spécifique à chaque redresseur, toutes ces liaisons aboutissant à l'ensemble régulateur, car ce dernier comporterait alors un grand nombre d'entrées (une par liaison).

La solution à ce problème, selon l'invention, consiste à utiliser le système de détection des défauts déjà existant dans le régulateur 2, basé sur le signal de phase Ph, comme le montre bien la Figure 2.

Les différentes sorties de diagnostic diag des ASICs de pilotage 7 sont reliées entre elles par une connexion unique 9 à une borne d'une première résistance R, dont l'autre borne est reliée à une entrée « phase » P du régulateur 2.

Une seconde résistance R' est insérée en série entre une sortie Ph de l'alternateur et l'entrée « phase » P du régulateur 2.

Ces première et seconde résistances R,R' constituent un circuit additionneur à résistances qui superpose à la tension de phase Ph nominale une tension diag comprise entre 0V et 2V en cas de défaut de l'un des redresseurs synchrones 5, créant ainsi une anomalie détectée et signalée par le régulateur 2.

Alternativement à ce mode de réalisation préféré, dans un autre mode de réalisation préféré, l'entrée « phase » P du régulateur 2 est forcée à la tension présente sur la sortie de diagnostic diag de l'un des circuits de pilotage 7. Dans ce cas la première résistance R est supprimée.

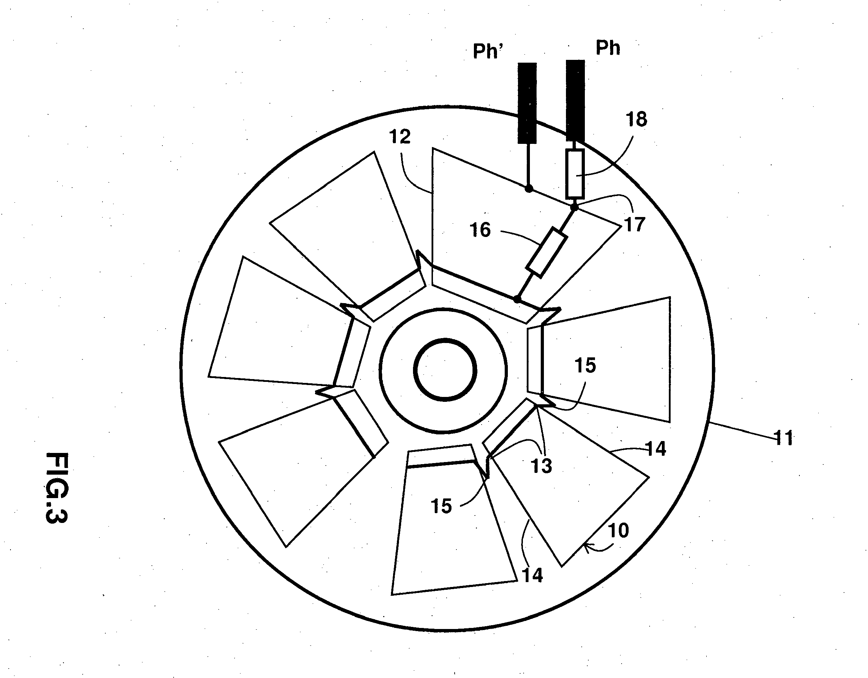

La Figure 3 montre un exemple de montage d'un dispositif de signalisation d'une anomalie de fonctionnement décrit ci-dessus sur un alternateur hexaphasé.

Les circuits de pilotage 7 des transistors de puissance 8 se présentent sous l'aspect de modules 10 sensiblement en forme de secteurs circulaires répartis sur la face arrière de l'alternateur 11.

Le boîtier 12 du régulateur 2 est également sensiblement en forme de secteur circulaire.

Les modules de redressement synchrone 10 comportent chacun deux bornes de diagnostic 13 sur leurs faces radiales 14, reliées entre elles dans le module 10.

Cette configuration permet de relier facilement entre elles toutes les bornes de diagnostic 13 au moment de l'assemblage, soit par contact de proximité 15, soit par vis, et de les relier également à une résistance 16 de 10 Kohm, elle-même reliée à la borne « phase » 17 du boîtier 12 du régulateur 2, qui est portée à l'une Ph des tensions de phases Ph1,Ph2,Ph3,Ph4,Ph5,Ph6 par une autre résistance 18 de 10 Kohm .

Comme il va de soi, l'invention ne se limite pas aux seuls modes d'exécution préférentiels décrits ci-dessus.

Notamment, une caractéristique courante autre que la tension, par exemple, la fréquence, peut, en variante, être modifiée pour simuler une anomalie de fonctionnement.

Le type des redresseurs 5 autres que les diodes 4, le type des semiconducteurs de puissance 8, et le nombre de phases Ph1,Ph2,Ph3,Ph4,Ph5,Ph6 de l'alternateur précisés ne sont donnés qu'à titre d'exemple.

Il en est de même de la valeur de la tension de la sortie de diagnostic diag et des valeurs des résistances R,R' spécifiées.

L'invention embrasse au contraire toutes les variantes possibles de réalisation qui resteraient dans le cadre défini par les revendications ci-après.

## Revendications

1. Procédé de signalisation d'une anomalie de fonctionnement d'un système électronique de puissance (6) d'un alternateur polyphasé (11), ledit système (6) étant du type de ceux comprenant un ensemble de redresseurs (5) aptes à redresser les tensions de phases (Ph1,Ph2,Ph3,Ph4,Ph5,Ph6) produites par ledit alternateur (11), et un ensemble de régulation (2,3) apte à commander un courant d'excitation dudit alternateur (11), à contrôler la conformité d'au moins une caractéristique courante d'au moins l'une (Ph) desdites tensions de phases (Ph1,Ph2,Ph3,Ph4,Ph5,Ph6) à une caractéristique nominale, et à signaler toute non-conformité, **caractérisé en ce que** l'on simule la non-conformité d'au moins une caractéristique courante d'au moins l'une (Ph) desdites tensions de phases (Ph1,Ph2,Ph3,Ph4,Ph5,Ph6) en cas de défaut de fonctionnement d'au moins l'un desdits redresseurs (5), ladite caractéristique courante étant une valeur instantanée de l'une (Ph) desdites tensions de phases (Ph1,Ph2,Ph3,Ph4,Ph5,Ph6) et ladite caractéristique nominale étant une tension nominale, et **en ce que** l'on additionne une tension d'erreur à au moins l'une (Ph) desdites tensions de phases (Ph1,Ph2,Ph3,Ph4,Ph5,Ph6) en cas de défaut de fonctionnement d'au moins l'un desdits redresseurs (5).

2. Procédé de signalisation d'une anomalie de fonctionnement d'un système électronique de puissance (6) d'un alternateur polyphasé (11) selon la revendication 1, **caractérisé en ce que** l'on force au moins l'une (Ph) desdites tensions de phases (Ph1,Ph2,Ph3,Ph4,Ph5,Ph6) à une tension non conforme en cas de défaut de fonctionnement d'au moins l'un desdits redresseurs (5).

3. Dispositif de signalisation d'une anomalie de fonctionnement d'un système électronique de puissance (6) d'un alternateur polyphasé (11) adapté à la mise en oeuvre du procédé selon l'une quelconque des revendication 1 ou 2, ledit système comprenant un ensemble de redresseurs (5) des tensions de phases (Ph1,Ph2,Ph3,Ph4,Ph5,Ph6) produites par ledit alternateur (11), et un ensemble de régulation (2,3) comportant des moyens de commande d'un courant d'excitation dudit alternateur (11), des moyens de contrôle (2) de la conformité d'au moins une caractéristique courante d'au moins l'une (Ph) desdites tensions de phases (Ph1,Ph2,Ph3,Ph4,Ph5,Ph6) à une caractéristique nominale, et des moyens d'indication (3) de toute non-conformité, **caractérisé en ce que** lesdits redresseurs (5) sont des redresseurs synchrones (5) comportant chacun un circuit de pilotage (7) comprenant des moyens de simulation de la non-conformité de ladite caractéristique courante en cas de défaut de fonctionnement, lesdits moyens de simulation comprennant un générateur produisant une tension de décalage en cas de défaut de fonctionnement, et ladite tension de décalage étant additionnée à au moins l'une desdites tensions de phases (Ph1,Ph2,Ph3,Ph4,Ph5,Ph6) au moyen d'un circuit additionneur, de préférence à résistances (R,R').

4. Dispositif de signalisation d'une anomalie de fonctionnement d'un système électronique de puissance (6) d'un alternateur polyphasé selon la revendication 3, **caractérisé en ce que** ledit circuit de pilotage (7) comporte au moins une borne de diagnostic (diag), de préférence deux (13), sur laquelle est appliquée ladite tension de décalage par ledit générateur.

5. Dispositif de signalisation d'une anomalie de fonctionnement d'un système électronique de puissance (6) d'un alternateur polyphasé (11) selon la revendication 4, **caractérisé en ce que** plusieurs exemplaires (13) de ladite borne de diagnostic (diag) sont reliés entre eux (15).

6. Alternateur polyphasé (11), de préférence hexaphasé, comportant un dispositif de signalisation d'une anomalie de fonctionnement d'un système électronique de puissance (6) selon l'une quelconque des revendications 3 à 5.

## Patentansprüche

1. Verfahren zur Anzeige einer Funktionsstörung eines elektronischen Leistungssystems (6) eines Mehrphasenwechselstromgenerators (11), wobei das System (6) von der Art ist, die eine Einheit von Gleichrichtern (5), die die vom Wechselstromgenerator (11) erzeugten Phasenspannungen (Ph1, Ph2, Ph3, Ph4, Ph5, Ph6) gleichrichten können, und eine Regelungseinheit (2, 3) enthält, die einen Erregerstrom des Wechselstromgenerators (11) steuern, die Übereinstimmung mindestens eines aktuellen Kennwerts mindestens einer (Ph) der Phasenspannungen (Ph1, Ph2, Ph3, Ph4, Ph5, Ph6) mit einem Nennkennwert überwachen und jede Nichtübereinstimmung anzeigen kann, **dadurch gekennzeichnet, dass** die Nichtübereinstimmung mindestens eines aktuellen Kennwerts mindestens einer (Ph) der Phasenspannungen (Ph1, Ph2, Ph3, Ph4, Ph5, Ph6) im Fall eines Funktionsausfalls mindestens eines der Gleichrichter (5) simuliert wird, wobei der aktuelle Kennwert ein Augenblickswert der einen (Ph) der Phasenspannungen (Ph1, Ph2, Ph3, Ph4, Ph5, Ph6) und der Nennkennwert eine Nennspannung ist, und dass eine Fehlerspannung zu mindestens einer (Ph) der Phasenspannungen (Ph1, Ph2, Ph3, Ph4, Ph5, Ph6) im Fall eines Funktionsausfalls mindestens eines der Gleichrichter (5) addiert wird.

2. Verfahren zur Anzeige einer Funktionsstörung eines elektronischen Leistungssystems (6) eines Mehrphasenwechselstromgenerators (11) nach Anspruch 1, **dadurch gekennzeichnet, dass** mindestens eine (Ph) der Phasenspannungen (Ph1, Ph2, Ph3, Ph4, Ph5, Ph6) im Fall eines Funktionsfehlers mindestens eines der Gleichrichter (5) auf eine nicht übereinstimmende Spannung gezwungen wird.

3. Vorrichtung zur Anzeige einer Funktionsstörung eines elektronischen Leistungssystems (6) eines Mehrphasenwechselstromgenerators (11), die an die Durchführung des Verfahrens nach einem der Ansprüche 1 oder 2 angepasst ist, wobei das System eine Einheit von Gleichrichtern (5) der vom Wechselstromgenerator (11) erzeugten Phasenspannungen (Ph1, Ph2, Ph3, Ph4, Ph5, Ph6) und eine Regelungseinheit (2, 3) enthält, die Steuereinrichtungen eines Erregerstroms des Wechselstromgenerators (11), Überwachungseinrichtungen (2) der Übereinstimmung mindestens eines aktuellen Kennwerts mindestens einer (Ph) der Phasenspannungen (Ph1, Ph2, Ph3, Ph4, Ph5, Ph6) mit einem Nennkennwert und Anzeigeeinrichtungen (3) jeder Nichtübereinstimmung aufweist, **dadurch gekennzeichnet, dass** die Gleichrichter (5) synchrone Gleichrichter (5) sind, die je eine Steuerschaltung (7) aufweisen, die Einrichtungen zur Simulation der Nichtübereinstimmung des aktuellen Kennwerts im Fall eines Funktionsfehlers enthält, wobei die Simulationseinrichtungen einen Generator enthalten, der im Fall eines Funktionsfehlers eine Offsetspannung erzeugt, und die Offsetspannung zu mindestens einer der Phasenspannungen (Ph1, Ph2, Ph3, Ph4, Ph5, Ph6) mittels einer Addierschaltung, vorzugsweise mit Widerständen (R, R'), hinzugefügt wird.

4. Vorrichtung zur Anzeige einer Funktionsstörung eines elektronischen Leistungssystems (6) eines Mehrphasenwechselstromgenerators (11) nach Anspruch 3, **dadurch gekennzeichnet, dass** die Steuerschaltung (7) mindestens einen Diagnoseanschluss (diag), vorzugsweise zwei (13), aufweist, an den die Offsetspannung vom Generator angelegt wird.

5. Vorrichtung zur Anzeige einer Funktionsstörung eines elektronischen Leistungssystems (6) eines Mehrphasenwechselstromgenerators (11) nach Anspruch 4, **dadurch gekennzeichnet, dass** mehrere Exemplare (13) des Diagnoseanschlusses (diag) miteinander verbunden sind (15).

6. Mehrphasenwechselstromgenerator (11), vorzugsweise sechsphasig, der eine Vorrichtung zur Anzeige einer Funktionsstörung eines elektronischen Leistungssystems (6) nach einem der Ansprüche 3 bis 5 aufweist.

## Claims

1. Method for signalling abnormal operation of an electronic power system (6) for a polyphase alternator (11), said system (6) being of the type of those comprising a set of rectifiers (5) able to rectify the phase voltages (Ph1, Ph2, Ph3, Ph4, Ph5, Ph6) produced by said alternator (11), and a regulation assembly (2,3) able to control a drive current of said alternator (11), to monitor the conformity of at least one current characteristic of at least one (Ph) of said phase voltages (Ph1, Ph2, Ph3, Ph4, Ph5, Ph6) to a nominal characteristic, and to signal any non-conformity, **characterized in that** the non-conformity of at least one current characteristic of at least one (Ph) of said phase voltages (Ph1, Ph2, Ph3, Ph4, Ph5, Ph6)is simulated in the event of a fault in the operation of at least one of said rectifiers (5),
said current characteristic being an instantaneous value of one (Ph) of said phase voltages (Ph1, Ph2, Ph3, Ph4, Ph5, Ph6) and said nominal characteristic being a nominal voltage, and
**in that** an error voltage is added to at least one (Ph) of said phase voltages (Ph1, Ph2, Ph3, Ph4, Ph5, Ph6) in the event of a fault in the operation of at least one of said rectifiers (5).

2. Method for signalling abnormal operation of an electronic power system (6) for a polyphase alternator (11) according to Claim 1, **characterized in that** at least one (Ph) of said phase voltages (Ph1, Ph2, Ph3, Ph4, Ph5, Ph6) is forced to a non-conforming voltage in the event of a fault in the operation of at least one of said rectifiers (5).

3. Device for signalling abnormal operation of an electronic power system (6) for a polyphase alternator (11) suitable for the implementation of the method according to any one of Claims 1 or 2, said system comprising a set of rectifiers (5) for the phase voltages (Ph1, Ph2, Ph3, Ph4, Ph5, Ph6) produced by said alternator (11), and a regulation assembly (2,3) including means for controlling a drive current of said alternator (11), means (2) for monitoring the conformity of at least one current characteristic of at least one (Ph) of said phase voltages (Ph1, Ph2, Ph3, Ph4, Ph5, Ph6) to a nominal characteristic, and means (3) for indicating any non-conformity, **characterized in that** said rectifiers (5) are synchronous rectifiers (5), each including a drive circuit (7) comprising means for simulating the non-conformity of said current characteristic in the event of an operating fault,
said simulating means comprising a generator producing an offset voltage in the event of an operating fault, and
said offset voltage being added to at least one of said phase voltages (Ph1, Ph2, Ph3, Ph4, Ph5, Ph6) by means of a summing circuit, preferably with resistors (R,R').

4. Device for signalling abnormal operation of an electronic power system (6) for a polyphase alternator according to Claim 3, **characterized in that** said drive circuit (7) includes at least one diagnostic terminal (diag), preferably two (13), to which said offset voltage is applied by said generator.

5. Device for signalling abnormal operation of an electronic power system (6) for a polyphase alternator (11) according to Claim 4, **characterized in that** several exemplars (13) of said diagnostic terminal (diag) are interconnected (15).

6. Polyphase, preferably six-phase, alternator (11) including a device for signalling abnormal operation of an electronic power system (6) according to any one of Claims 3 to 5.
